# EUROPEAN PATENT APPLICATION

(11) **EP 4 372 311 A1**
(43) Date of publication of application: **22.05.2024**
(21) Application number: 22863239.4
(22) Date of filing: 23.08.2022
(51) Int. Cl.: G01C 21/16, G01C 25/00

(54) **INERTIAL SENSOR AND ELECTRONIC DEVICE**

(30) Priority: 31.08.2021 CN 202111014475
(71) Applicant: Huawei Technologies Co., Ltd., Shenzhen, Guangdong 518129 (CN)
(72) Inventor: CHU, Huai Yuan, Shenzhen, Guangdong 518129 (CN); JIA, Mengru, Shenzhen, Guangdong 518129 (CN)
(74) Representative: Isarpatent
(86) International application number: PCT/CN2022/114309
(87) International publication number: WO 2023/030100

(57) **Abstract**

An inertial sensor and an electronic device are provided. A mechanical structure layer (220) of the inertial sensor includes a stator (221) and a mover (222), and a detection electrode (241) is disposed on an insulated substrate (211). The mover (222) is driven to move relative to the stator (221), and a variation of capacitance generated by the detection electrode (241) and the mover (222) is detected, so that a motion status of the inertial sensor or a motion status of the electronic device may be determined. The insulated substrate (211) is in a sealed connection to the mechanical structure layer (220), to wrap a first electrical connector (212) on the insulated substrate (211). In this way, electrical connections of components in the inertial sensor can be implemented when the sealed connection is implemented and a vacuum degree is improved.

## Description

This application claims priority to Chinese Patent Application No. 202111014475.2, filed with the China National Intellectual Property Administration on August 31, 2021 and entitled "INERTIAL SENSOR AND ELECTRONIC DEVICE", which is incorporated herein by reference in its entirety.

### TECHNICAL FIELD

This application relates to the field of inertial sensors and the field of electronic devices, and more specifically, to an inertial sensor and an electronic device.

### BACKGROUND

An electronic device may use an inertial sensor (which may also be referred to as an inertial measurement unit (inertial measurement unit, IMU)) to detect motion status such as an acceleration and a tilt angle of the electronic device, to identify, for example, impact, rotation, and vibration of the electronic device. Further, the electronic device may implement functions such as navigation, orientation, screen rotation, and camera stabilization. Performance of the inertial sensor applied to the electronic device needs to be improved. For example, detection precision of the inertial sensor should be high. For another example, space occupied by the inertial sensor in the electronic device may be minimized. For another example, the inertial sensor should facilitate wiring.

### SUMMARY

This application provides an inertial sensor and an electronic device, and aims to optimize performance of the inertial sensor applied to the electronic device.

According to a first aspect, a substrate layer, a mechanical structure layer, and a cover layer that are stacked are included. The mechanical structure layer is in a sealed connection between the substrate layer and the cover layer.

The substrate layer includes a substrate. The substrate is an insulator, the mechanical structure layer is in a sealed connection to the substrate to form a sealing connection part between the mechanical structure layer and the substrate, and the sealing connection part is an insulator.

The substrate layer further includes a first electrical connector. The first electrical connector is attached to a side that is of the substrate and that is close to the mechanical structure layer, and the first electrical connector includes an internal pin.

A first end face of the internal pin is in contact with the substrate. A second end face of the internal pin is in contact with the mechanical structure layer. A side surface of the internal pin is connected between the first end face and the second end face. The side surface of the internal pin is in contact with the sealing connection part. The internal pin is electrically connected to the mechanical structure layer.

The substrate may be in the sealed connection to the mechanical structure layer by using a bonding process, and internal stress may be generated in the part formed through the sealed connection between the substrate base and the mechanical structure layer. The internal stress may act on the internal pin, so that the part formed through the sealed connection between the substrate base and the mechanical structure layer can press against the internal pin. After the internal pin receives compressive force, stability of a signal transmitted by the internal pin may be improved, and impedance of the first electrical connector may also be reduced.

Because some materials may volatilize gas, and the mechanical structure layer has a high requirement on a vacuum degree, the substrate is directly disposed in the sealed connection to the mechanical structure layer. This helps reduce a possibility of gas volatilized by a component of the inertial sensor in a cavity including the substrate layer, the mechanical structure layer, and the cover layer, and helps maintain the vacuum degree of the cavity including the substrate layer, the mechanical structure layer, and the cover layer.

The substrate is directly disposed in the sealed connection to the mechanical structure layer, so that the substrate and the mechanical structure layer may be easily aligned. This helps reduce processing precision for aligning and connecting the substrate with the mechanical structure layer.

The substrate is directly disposed in the sealed connection to the mechanical structure layer. This helps reduce materials used by the inertial sensor, and reduce processes for processing the materials. This further helps reduce costs for manufacturing the inertial sensor.

In an embodiment, the mechanical structure layer includes a stator and a mover, the stator is fastened to the substrate layer, and the mover can move relative to the stator. The first electrical connector further includes a line and a detection electrode, the line is electrically connected between the internal pin and the detection electrode, and the detection electrode is disposed opposite to the mover to generate capacitance. The inertial sensor further includes a chip, and the chip is configured to: drive, by using the internal pin, the mover to move relative to the stator, and obtain, by using the line and the detection electrode, a variation of a capacitance value of the capacitance generated by the mover and the detection electrode.

Because the detection electrode is disposed on the insulated substrate and the detection electrode is disposed close to the mover, a distance between the detection electrode and another conductor part of a detection component is long, and parasitic capacitance that affects a detection result is not easy to form, so that the result obtained by the chip may be more accurate. In this way, a motion status of the electronic device or a motion status of the inertial sensor is obtained more accurately.

With reference to the first aspect, in some implementations of the first aspect, the substrate includes a substrate groove, and the first electrical connector is at least partially accommodated in the substrate groove.

Because the first electrical connector may be at least partially accommodated in the substrate groove, space (especially space occupied in a thickness direction) occupied by the first electrical connector in the detection component may be small. The first electrical connector may be at least partially accommodated in the substrate groove. This facilitates an increase of a thickness of the first electrical connector, helps reduce impedance of the first electrical connector, and further helps improve detection performance of the inertial sensor. The substrate groove may provide accommodation space for the first electrical connector, which helps flexibly design structure parameters such as a thickness of the first electrical connector and arrangement of the first electrical connector, so that the first electrical connector is provided with a plurality of conductive layers. Therefore, the substrate groove is disposed on the substrate, so that line arrangement of the first electrical connector may be sparse.

With reference to the first aspect, in some implementations of the first aspect, the substrate layer further includes a line protection layer. The line protection layer is disposed on the side that is of the substrate and that is close to the mechanical structure layer, and is located in a cavity formed through the sealed connection between the mechanical structure layer and the substrate. The line protection layer wraps a part of a periphery of the first electrical connector.

The line protection layer may be insulated. The line protection layer helps reduce a possibility of line damage. The line protection layer may be located in a sealed or vacuum cavity including the substrate layer, the mechanical structure layer, and the cover layer, so that the substrate layer and the mechanical structure layer are directly connected.

With reference to the first aspect, in some implementations of the first aspect, the first electrical connector includes a first conductive layer and a second conductive layer, the first conductive layer includes a first part of a line of the first electrical connector, and the second conductive layer includes a second part of the line of the first electrical connector.

The plurality of conductive layers may facilitate an implementation of a line jumper, thereby facilitating flexible wiring. To improve or maintain capacitance detection performance of the inertial sensor, a spacing between lines should not be excessively small. In comparison with a single-layer first electrical connector, a line arrangement density of the first electrical connector that is provided with the plurality of conductive layers may be sparse. This helps improve or maintain the capacitance detection performance of the inertial sensor.

With reference to the first aspect, in some implementations of the first aspect, the substrate layer further includes:
a second electrical connector, where the second electrical connector is attached to a side that is of the substrate and that is away from the first electrical connector; and
a via, where the via penetrates the substrate and is electrically connected between the first electrical connector and the second electrical connector. The chip is electrically connected to the first electrical connector by using the second electrical connector and the via.

Through the via, a circuit located in the airtight cavity including the substrate layer, the mechanical structure layer, and the cover layer may be led out of the airtight cavity. This facilitates an electrical connection between the chip and a circuit at the substrate layer, and further helps reduce lateral space occupied by the inertial sensor.

In an embodiment, the first electrical connector further includes the line and the internal pin, and the line is electrically connected between the internal pin and the detection electrode.

The second electrical connector includes an external pin, and the external pin is electrically connected to the chip.

The via is electrically connected between the internal pin and the external pin.

Because a port of the chip is usually difficult to change, to make it easier for the external pin to match the port of the chip, the line may be arranged by using the first electrical connector, to adjust a position of the external pin. Because the first electrical connector is located inside the airtight cavity including the substrate layer, the mechanical structure layer, and the cover layer, and the second electrical connector is located outside the airtight cavity including the substrate layer, the mechanical structure layer, and the cover layer. In comparison with arrangement of the second electrical connector, that the line is preferentially arranged on the first electrical connector helps reduce a possibility that the line is damaged by external pollutants.

With reference to the first aspect, in some implementations of the first aspect, the second electrical connector covers the via, and is in a sealed connection to the substrate.

To prevent the external pollutants from entering the via, the second electrical connector may be sealed and attached to the substrate. This helps maintain detection precision of the inertial sensor.

With reference to the first aspect, in some implementations of the first aspect, the first electrical connector covers the via, and is in a sealed connection to the substrate.

To prevent the external pollutants that pass through the via from entering the airtight cavity including the substrate layer, the mechanical structure layer, and the cover layer, the first electrical connector may be sealed and attached to the substrate. This helps maintain the detection precision of the inertial sensor.

With reference to the first aspect, in some implementations of the first aspect, the inertial sensor further includes a chip, and the chip is disposed on a side that is of the substrate layer and that is away from the mechanical structure layer.

The chip is disposed at the substrate layer. This helps shorten an electrical connection path between the chip and the mechanical structure layer, and helps reduce impedance of the inertial sensor.

With reference to the first aspect, in some implementations of the first aspect, the chip is disposed on a side that is of the cover layer and that is away from the mechanical structure layer, and the cover layer includes:
a cover substrate, where the cover substrate is a conductor, the cover substrate is in a sealed connection to the mechanical structure layer, and the cover substrate includes a first part and a second part;
an insulation part, where the insulation part penetrates the cover substrate, and the first part of the cover substrate and the second part of the cover substrate are located on both sides of the insulation part; and
a third electrical connector, where the third electrical connector is attached to a side that is of the cover substrate and that is close to the chip, the third electrical connector is electrically connected to a first part at the mechanical structure layer through the first part of the cover substrate, and the third electrical connector is electrically connected to the internal pin through the second part (a) of the cover substrate and a second part at the mechanical structure layer.

The insulation part is disposed at the cover layer, so that the cover layer may be divided into a plurality of parts that are not short-circuited with each other. This facilitates signal transmission by using the cover layer, and improves wiring flexibility of the inertial sensor.

With reference to the first aspect, in some implementations of the first aspect, the first part of the cover substrate and the mechanical structure layer are connected by a bonding connector, the first part of the cover substrate further includes an overflow groove, and the overflow groove is located between the bonding connector and the insulation part.

The bonding connector may preferentially flow into the overflow groove at a high temperature. This helps reduce a possibility that the bonding connector flows from the first part of the cover substrate to the second part of the cover substrate, and further helps reduce a possibility that the first part of the cover substrate and the second part of the cover substrate are conducted.

With reference to the first aspect, in some implementations of the first aspect, the inertial sensor further includes the chip, and the chip is disposed on the side that is of the cover layer and that is away from the mechanical structure layer.

The chip may control the mechanical structure layer by using the cover layer. This helps improve flexibility of an electrical connection between the chip and the mechanical structure layer.

With reference to the first aspect, in some implementations of the first aspect, resistivity of the substrate is greater than 10⁹ Ωm.

The resistivity of the substrate is high. This helps reduce the parasitic capacitance that is of the inertial sensor and that is generated by using the substrate, and further helps improve the detection precision of the inertial sensor.

With reference to the first aspect, in some implementations of the first aspect, a material of the substrate is glass, and a material of the mechanical structure layer is monocrystalline silicon or polycrystalline silicon.

A processing process of a silicon material is mature, and performance of glass is similar to performance of silicon, for example, a coefficient of thermal expansion of the glass may be close to a coefficient of thermal expansion of the silicon. This helps improve mechanical stability of the inertial sensor.

According to a second aspect, an electronic device is provided, including the inertial sensor in any implementation of the first aspect.

### BRIEF DESCRIPTION OF DRAWINGS

FIG. 1 is a schematic diagram of a structure of an electronic device according to an embodiment of this application;
FIG. 2 is a schematic diagram of a structure of an inertial sensor according to an embodiment of this application;
FIG. 3 is a schematic diagram of a structure of another inertial sensor according to an embodiment of this application;
FIG. 4 is a schematic diagram of a structure of an inertial sensor according to an embodiment of this application;
FIG. 5 is a view of the inertial sensor in FIG. 4;
FIG. 6 is a schematic diagram of a structure of a first electrical connector in FIG. 4;
FIG. 7 is a schematic diagram of a structure of a mechanical structure layer in FIG. 4;
FIG. 8 is a schematic diagram of a structure of another inertial sensor according to an embodiment of this application;
FIG. 9 is a view of the inertial sensor in FIG. 8;
FIG. 10 is a schematic diagram of a structure of a first electrical connector in FIG. 8;
FIG. 11 is a schematic diagram of a structure of still another inertial sensor according to an embodiment of this application;
FIG. 12 is a schematic diagram of a structure of yet another inertial sensor according to an embodiment of this application;
FIG. 13 is a schematic diagram of a structure of a first conductive layer in FIG. 12;
FIG. 14 is a schematic diagram of a structure of a second conductive layer in FIG. 12;
FIG. 15 is a schematic diagram of a structure of still yet another inertial sensor according to an embodiment of this application;
FIG. 16 is a schematic diagram of a structure of a third electrical connector in FIG. 15;
FIG. 17 is a schematic diagram of a structure of a first electrical connector in FIG. 15;
FIG. 18 is a schematic flowchart of a processing method of the inertial sensor in FIG. 8;
FIG. 19 is a schematic flowchart of a processing method of the inertial sensor in FIG. 8;
FIG. 20 is a schematic flowchart of a processing method of the inertial sensor in FIG. 8;
FIG. 21 is a schematic flowchart of a processing method of the inertial sensor in FIG. 8; and
FIG. 22 is a schematic flowchart of a processing method of the inertial sensor in FIG. 8.

### DESCRIPTION OF EMBODIMENTS

The following describes technical solutions of this application with reference to the accompanying drawings.

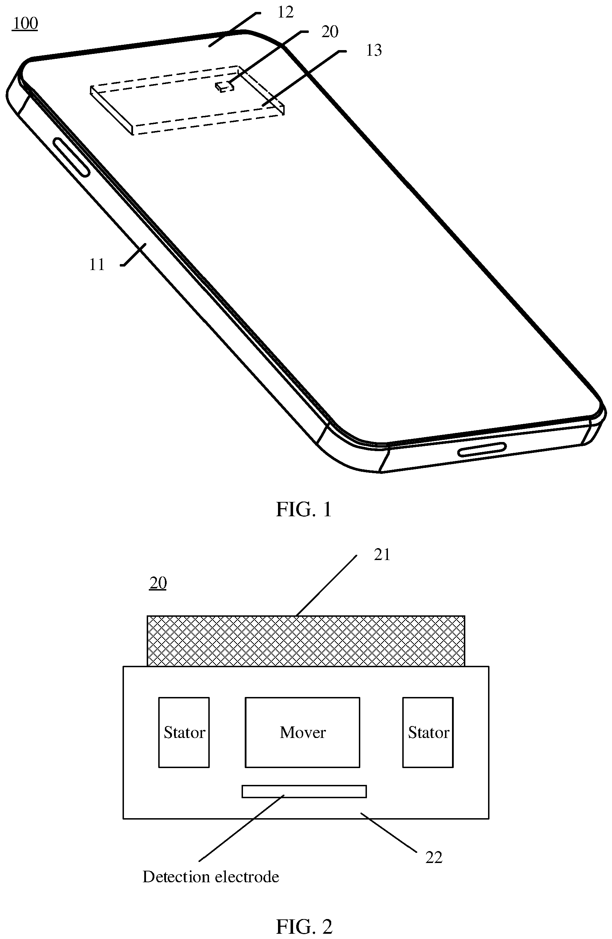

FIG. 1 is a schematic diagram of a structure of an electronic device 100 according to an embodiment of this application. For example, the electronic device 100 may be a terminal consumer product or a 3C electronic product (a computer (computer), communication (communication), or consumer (consumer) electronic product), for example, a device such as a mobile phone, a portable computer, a tablet computer, an e-reader, a notebook computer, a digital camera, a wearable device, a headset, a watch, or a stylus. An embodiment shown in FIG. 1 is described by using an example in which the electronic device 100 is the mobile phone.

The electronic device 100 may include a housing 11, a display 12, and a circuit board assembly 13. Specifically, the housing 11 may include a frame and a rear cover. The frame may be located between the display 12 and the rear cover. The frame may surround a periphery of the display 12 and surround a periphery of the rear cover. A cavity formed between the display 12, the frame, and the rear cover may be configured to accommodate the circuit board assembly 13. The circuit board assembly 13 may include a circuit board, and an inertial sensor 20 disposed on the circuit board. The circuit board may be, for example, a mainboard or a sub-board.

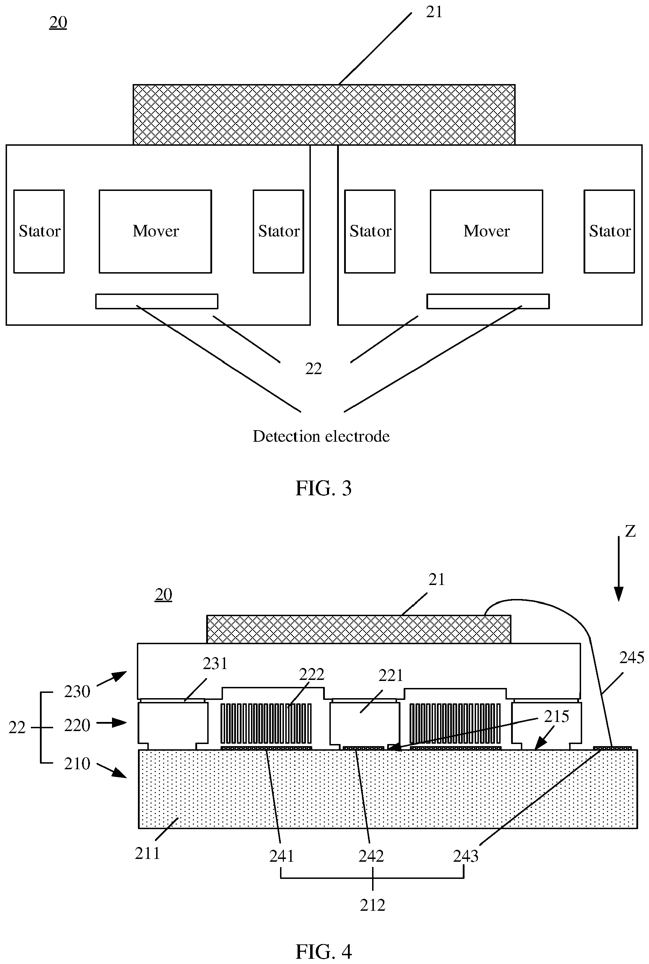

FIG. 2 and FIG. 3 show two embodiments of the inertial sensor 20. In an embodiment shown in FIG. 2, the inertial sensor 20 may be an acceleration sensor, or may be a gyroscope, or may integrate an acceleration sensor and a gyroscope. In an embodiment shown in FIG. 3, the inertial sensor 20 may integrate a gyroscope and an acceleration sensor. In an embodiment in which the inertial sensor 20 integrates the acceleration sensor and the gyroscope, the inertial sensor 20 may be a sensor that can implement both a function of the acceleration sensor and a function of the gyroscope.

A gyroscope sensor may be configured to determine a motion posture of the electronic device 100. In some embodiments, angular velocities of the electronic device 100 around three axes (that is, X, Y, and Z axes) may be determined by using the gyroscope sensor. The gyroscope sensor may be used for image stabilization. For example, when a shutter is pressed, the gyroscope sensor detects an angle at which the electronic device 100 jitters; calculates, based on the angle, a distance for which a lens module needs to compensate; and allows the lens to cancel the jitter of the electronic device 100 through reverse motion, to implement image stabilization. The gyroscope sensor may also be used in a navigation scenario and a somatic game scenario.

The acceleration sensor may detect an acceleration value of the electronic device 100 in each direction (generally three axes). When the electronic device 100 is still, a magnitude and a direction of gravity may be detected. The acceleration sensor may further be configured to identify a posture of the electronic device 100, and is applied to an application such as switching between a landscape mode and a portrait mode or a pedometer.

As shown in FIG. 2 and FIG. 3, the inertial sensor 20 may include a chip 21 and one or more detection components 22. A part or all of the detection component 22 may also be referred to as a micro-electro-mechanical system (micro-electro-mechanical system, MEMS). The chip 21 may be electrically connected to the detection component 22. In an embodiment shown in FIG. 2, the inertial sensor 20 may include a single detection component 22. The chip 21 may obtain a signal related to an acceleration and/or an angular velocity by using the detection component 22. In an embodiment shown in FIG. 3, the inertial sensor 20 may include two detection components 22. The chip 21 may obtain an acceleration-related signal by using one detection component 22, and obtain an angular velocity-related signal by using another detection component 22.

With reference to FIG. 1, FIG. 2, and FIG. 3, the following describes a principle of obtaining a motion status of the electronic device 100 by using the inertial sensor 20.

The detection component 22 may include a mover, a stator, and a detection electrode. The stator may be fastened in the electronic device 100. The mover may move relative to the stator. There is a gap between the stator and the mover, so that the stator and the mover may generate capacitance. The capacitance generated by the stator and the mover may be used to drive the mover to move relative to the stator. Capacitance may be generated between the mover and the detection electrode. The capacitance generated by the mover and the detection electrode may be used to detect the motion status of the electronic device 100. In an embodiment, the mover and stator may include, for example, a comb structure. A comb-like mover may be a movable comb. A comb-like stator may be a fixed comb.

The chip 21 may send an alternating current signal to the detection component 22, to drive the mover of the detection component 22 to vibrate relative to the stator at a preset frequency. Vibration basically does not change a spacing between the detection electrode and the mover, and a capacitance value of the capacitance generated by the detection electrode and the mover basically remains unchanged. Therefore, when no motion (including translation, rotation, or the like) occurs in the electronic device 100, the capacitance value of the capacitance generated by the detection electrode and the mover basically remains unchanged correspondingly. When the electronic device 100 moves, the motion of the electronic device 100 may cause the mover to bear additional force. The force may change the spacing between the detection electrode and the mover, to change the capacitance value of the capacitance generated by the detection electrode and the mover. The chip 21 may obtain a variation of the capacitance value of the capacitance generated by the detection electrode and the mover, to obtain a signal related to the motion status of the electronic device 100.

The chip 21 and the detection component 22 may be electrically connected to the detection component 22 by using a plurality of pins on the detection component 22. The chip 21 may be electrically connected to the plurality of pins in a manner such as wire bonding (wire bonding), spot soldering, conductive bonding, conductive material coating, or the like. The chip 21 may drive, by using some of the plurality of pins, the mover on the detection component 22 to vibrate. The chip 21 may further obtain, by using the others of the plurality of pins, a capacitance value of the capacitance generated by the stator and the mover.

The detection component 22 may be mainly made of a conductive material. In addition to a conductive part related to motion status detection, if other conductive parts that are disconnected from each other are disposed extremely close to each other, parasitic capacitance may be generated. As a result, accuracy of a capacitance detection result that is obtained by the chip 21 from the detection component 22 may be affected.

FIG. 4 is a schematic diagram of a structure of the inertial sensor 20 according to an embodiment of this application. The inertial sensor 20 shown in FIG. 4 may correspond to the inertial sensor 20 shown in FIG. 1.

The inertial sensor 20 may include the chip 21 and the detection component 22. The detection component 22 may include a substrate layer 210, a mechanical structure layer 220, and a cover layer 230 that are stacked. The mechanical structure layer 220 may be located between the cover layer 230 and the substrate layer 210. The mechanical structure layer 220 may also be referred to as an MEMS layer. The mechanical structure layer 220 may be a key layer of the detection component 22. The mechanical structure layer 220 may be made of or mainly made of a conductor material. The mechanical structure layer 220 may include a stator 221 and a mover 222. In an embodiment shown in FIG. 4, the chip 21 may be disposed on the cover layer 230. The chip 21 in another embodiment may alternatively be disposed at the substrate layer 210.

Through bonding, the mechanical structure layer 220 may be fastened to the substrate layer 210, and the mechanical structure layer 220 is in a sealed connection to the substrate layer 210. Through bonding, the cover layer 230 may be fastened to the mechanical structure layer 220, and the cover layer 230 is in a sealed connection to the mechanical structure layer 220. Therefore, components (the mover 222, a detection electrode 241, and the like shown in FIG. 4) of the inertial sensor 20 for detecting a motion status of the electronic device 100 may be accommodated in an airtight cavity including the substrate layer 210, the mechanical structure layer 220, and the cover layer 230.

The substrate layer 210 may include a substrate 211. The substrate 211 may be prepared by using an insulation material (for example, glass). The substrate 211 may be in a sealed connection to the mechanical structure layer 220. A sealing connection part 215 between the substrate 211 and the mechanical structure layer 220 may be an insulator. In other words, a signal at the mechanical structure layer 220 may not be conducted through the sealing connection part 215.

In some embodiments, resistivity of the substrate 211 is greater than 10⁹ Ωm. In some other embodiments, a coefficient of thermal expansion of the substrate 211 may be close to a coefficient of thermal expansion of the mechanical structure layer 220. Because heating is generally required in a bonding process, that the coefficient of thermal expansion of the substrate 211 is close to the coefficient of thermal expansion of the mechanical structure layer 220 helps improve stability of a bonding relationship between the substrate 211 and the mechanical structure layer 220, and reduce a possibility that a crack is generated at the substrate layer 210 or the mechanical structure layer 220. This helps improve mechanical stability of the inertial sensor.

In an embodiment, the substrate 211 may be prepared by using the glass, and the mechanical structure layer 220 may be prepared by using monocrystalline silicon or polycrystalline silicon. As shown in FIG. 4, the substrate 211 and the mechanical structure layer 220 may be integrated through anodic bonding, to implement the sealed connection between the substrate 211 and the mechanical structure layer 220. A temperature used for anodic bonding may be small. This helps reduce internal stress of the substrate 211 and the mechanical structure layer 220.

The substrate layer 210 may further include a first electrical connector 212 disposed on the substrate 211. The first electrical connector 212 may be attached to a side that is of the substrate 211 and that is close to the mechanical structure layer 220.

For example, the first electrical connector 212 may include the detection electrode 241. The detection electrode 241 may be disposed opposite to the mover 222 at the mechanical structure layer 220. A signal output by the detection electrode 241 may be transmitted to the chip 21.

For another example, the first electrical connector 212 may further include an internal pin 242 and an external pin 243. The internal pin 242 may be connected to the stator 221 at the mechanical structure layer 220. The external pin 243 may be electrically connected to the chip 21. In an embodiment shown in FIG. 4, the chip 21 may be electrically connected to the external pin 243 by using an electrical connection wire 245.

The internal pin 242 may be in contact with the sealing connection part 215 including the substrate 211 and the mechanical structure layer 220. The internal pin 242 may include a first end face and a second end face that are disposed in parallel to the substrate layer 210. The first end face may be in contact with the mechanical structure layer 220, and the second end face may be in contact with the substrate layer 210. In this way, the internal pin 242 may be electrically connected to the mechanical structure layer 220. The internal pin 242 may further include a side surface connected between the first end face and the second end face, and the side surface may be in contact with the sealing connection part 215. In an embodiment shown in FIG. 4, the internal pin 242 may be wrapped by the sealing connection part 215. In another embodiment, one side of the internal pin 242 may be wrapped by the sealing connection part 215, and the other side may extend out of the sealing connection part 215.

For another example, the first electrical connector 212 may further include a line (not shown in FIG. 4). The line may be electrically connected between the detection electrode 241 and the internal pin 242, may alternatively be electrically connected between the internal pin 242 and the external pin 243, and may alternatively be electrically connected between the detection electrode 241 and the external pin 243.

When the line passes through the sealing connection part 215 including the substrate 211 and the mechanical structure layer 220, the sealing connection part may be in contact with a side surface of the line.

In an embodiment, the chip 21 may output an electrical signal to the stator 221 at the mechanical structure layer 220 by using the external pin 243, the line, and the internal pin 242 of the first electrical connector 212, so that the mover 222 at the mechanical structure layer 220 moves relative to the stator 221.

In another embodiment, one port of the chip 21 may be electrically connected to the detection electrode 241 of the first electrical connector 212 by using the external pin 243 and the line of the first electrical connector 212, and another port of the chip 21 may be electrically connected to the mover 222 at the mechanical structure layer 220 by using the external pin 243, the line, and the internal pin 242 of the first electrical connector 212, so that the chip 21 may obtain a variation of a capacitance value of capacitance generated by the detection electrode 241 and the mover 222.

In addition to the detection electrode 241 disposed at the substrate layer 210 shown in FIG. 4, a detection electrode may alternatively be disposed at another position of the inertial sensor. For example, the detection electrode may be disposed on the stator 221 at the mechanical structure layer 220. For another example, the detection electrode may be disposed on a side that is of the cover layer 230 and that is close to the mechanical structure layer 220.

Because the detection electrode 241 is disposed on the insulated substrate 211 and the detection electrode 241 is disposed close to the mover 222, a distance between the detection electrode 241 and another conductor part of the detection component 22 is long, and capacitance that affects a detection result is not easy to form, so that the variation of the capacitance value that is obtained by the chip 21 may be more accurate. In this way, a motion status of the electronic device or a motion status of the inertial sensor 20 is obtained more accurately.

In some embodiments, the substrate layer 210 may further include a line protection layer. The line protection layer may be disposed on the side that is of the substrate 211 and that is close to the mechanical structure layer 220. The line protection layer may be insulated. The line protection layer may wrap at least a part of a periphery of the line of the first electrical connector 212. For example, the line of the first electrical connector 212 may be attached between the line protection layer and the substrate 211. The line protection layer may include a pin opening. The internal pin 242 or the external pin 243 of the first electrical connector 212 may be accommodated in the pin opening, and the line protection layer is exposed. This helps implement an electrical connection between the external pin 243 and the chip 21, or an electrical connection between the internal pin 242 and the mechanical structure layer 220.

A manner of bonding between the mechanical structure layer 220 and the cover layer 230 may be, for example, anodic bonding or eutectic bonding.

In an embodiment, the cover layer 230 may be in a sealed connection to the mechanical structure layer 220 through eutectic bonding. As shown in FIG. 4, a bonding part is predisposed at both the cover layer 230 and the mechanical structure layer 220. A bonding part at the cover layer 230 and a bonding part at the mechanical structure layer 220 may be integrated, through heating, to form a bonding connector 231 that is connected between the cover layer 230 and the mechanical structure layer 220, to implement the sealed connection between the cover layer 230 and the mechanical structure layer 220. The cover layer 230 and the mechanical structure layer 220 may be, for example, made of monocrystalline silicon.

In another embodiment, the cover layer 230 and the mechanical structure layer 220 may be integrated through anodic bonding, to implement the sealed connection between the cover layer 230 and the mechanical structure layer 220. The cover layer 230 may be, for example, made of monocrystalline silicon. The mechanical structure layer 220 may be, for example, made of polycrystalline silicon.

In some embodiments, the cover layer 230 may be mainly made of the insulation material or the conductor material. For example, the cover layer 230 may be made of glass, monocrystalline silicon, or polycrystalline silicon. The cover layer 230 is prepared by using the insulation material, for example, glass. This helps reduce a possibility that the cover layer 230 and the mover 222 at the mechanical structure layer 220 generate the capacitance that affects the detection result. The cover layer 230 is prepared by using the conductor material, for example, monocrystalline silicon, so that the cover layer 230 is used to form a conductive circuit of the inertial sensor 20.

As shown in FIG. 4, the cover layer 230 may further include a groove, and the groove may be disposed opposite to the mover 222 at the mechanical structure layer 220. An indentation direction of the groove may be a direction away from the mover 222. That the groove is disposed at the cover layer 230 helps reduce the possibility that the cover layer 230 and the mover 222 generate the capacitance that affects the detection result.

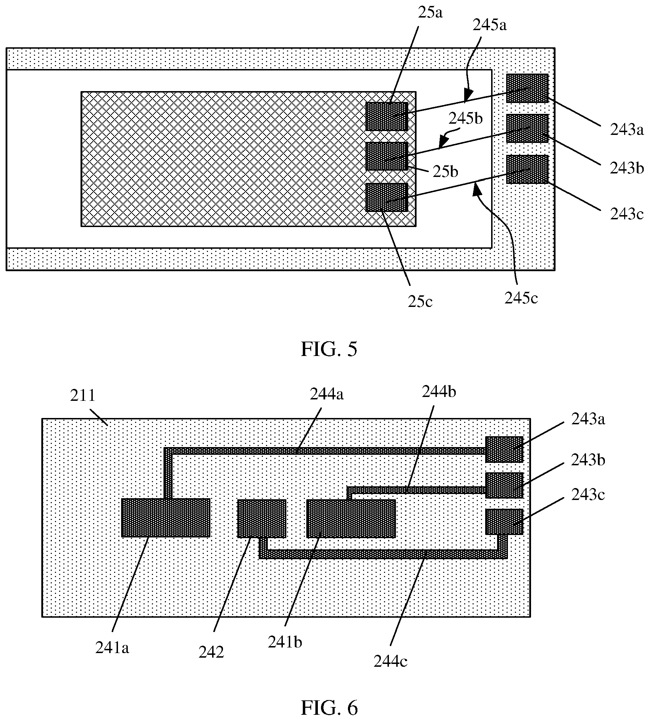

The inertial sensor 20 may be observed in a Z direction shown in FIG. 4, to obtain a schematic diagram of a structure shown in FIG. 5. The first electrical connector 212 on the substrate 211 may be observed in the Z direction shown in FIG. 4, to obtain a schematic diagram of a structure shown in FIG. 6. It should be understood that the inertial sensor 20 shown in FIG. 5 or the first electrical connector 212 shown in FIG. 6 is merely an embodiment. Persons skilled in the art may easily deduce another possible structure based on the solutions provided in this application. For example, the first electrical connector 212 may alternatively include more or few components.

As shown in FIG. 5, the chip 21 may include a port 25a, a port 25b, and a port 25c. The first electrical connector 212 at the substrate layer 210 may include an external pin 243a, an external pin 243b, and an external pin 243c. The external pin 243a may be electrically connected to the port 25a by using an electrical connection wire 245a. The external pin 243b may be electrically connected to the port 25b by using an electrical connection wire 245b. The external pin 243c may be electrically connected to the port 25c by using an electrical connection wire 245c. In another embodiment, a port of the chip 21 and the external pin 243 may alternatively be electrically connected by using a solder ball, a conductive filler, a conductive adhesive, or the like.

As shown in FIG. 6, the first electrical connector 212 at the substrate layer 210 may further include a line 244a, a line 244b, and a line 244c. The first electrical connector 212 at the substrate layer 210 may further include a detection electrode 241a, a detection electrode 241b, and the internal pin 242. The line 244a may be electrically connected between the detection electrode 241a and the external pin 243a. The line 244b may be electrically connected between the detection electrode 241b and the external pin 243b. The line 244c may be electrically connected between the internal pin 242 and the external pin 243c. The internal pin 242 may be electrically connected to the mechanical structure layer 220 shown in FIG. 4. With reference to FIG. 4, the detection electrode 241a may be disposed opposite to one mover 222 at the mechanical structure layer 220, and the detection electrode 241b may be disposed opposite to another mover 222 at the mechanical structure layer 220.

As shown in FIG. 5 and FIG. 6, the chip 21 may obtain a variation of a capacitance value of capacitance generated by the detection electrode 241a and the mover 222 at the mechanical structure layer 220 by using the external pin 243a, the line 244a, the detection electrode 241a, the external pin 243c, the line 244c, and the internal pin 242. The chip 21 may obtain a variation of a capacitance value of capacitance generated by the detection electrode 241b and the mover 222 by using the external pin 243b, the line 244b, the detection electrode 241b, the external pin 243c, the line 244c, and the internal pin 242. The chip 21 may drive, by using the external pin 243c, the line 244c, and the internal pin 242, the mover 222 to move relative to the stator 221 at the mechanical structure layer 220.

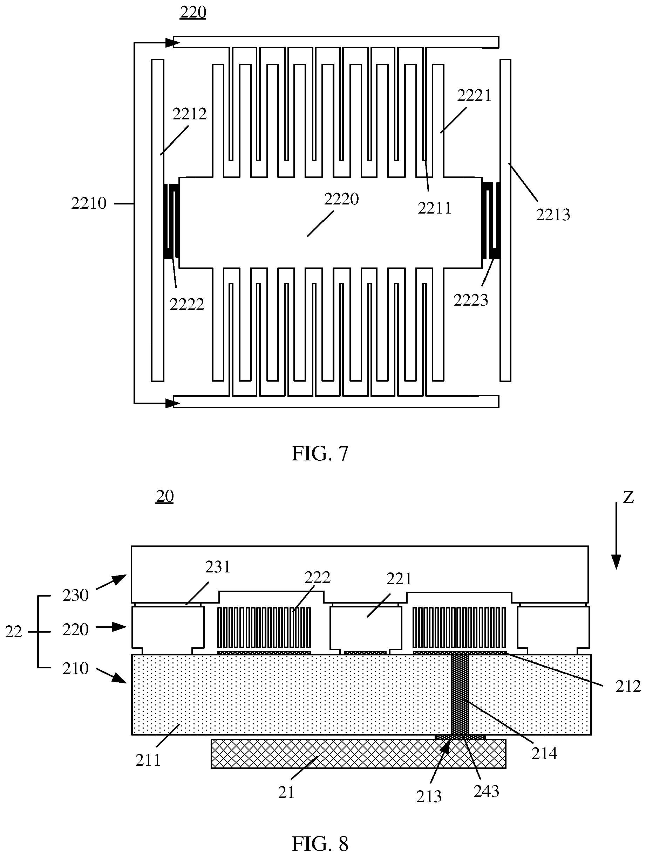

The mechanical structure layer 220 may be observed in the Z direction shown in FIG. 4, to obtain a schematic diagram of a structure shown in FIG. 7. FIG. 7 shows a possible embodiment of the mechanical structure layer 220. The mechanical structure layer 220 provided in embodiments of this application may not be limited to an embodiment shown in FIG. 7.

The mechanical structure layer 220 may include fixed combs 2210 and movable combs 2220. The fixed comb 2210 may belong to the stator 221 shown in FIG. 4. The movable comb 2220 may belong to the mover 222 shown in FIG. 4. The fixed comb 2210 may be integrally fastened relative to the inertial sensor 20. The movable comb 2220 may move relative to the fixed comb 2210. With reference to FIG. 4, the movable comb 2220 may be disposed opposite to the detection electrode 241 at the substrate layer 210, to generate capacitance by using the movable comb 2220 and the detection electrode 241. A capacitance value of the capacitance generated by the movable comb 2220 and the detection electrode 241 may indicate the motion status of the inertial sensor 20.

The fixed comb 2210 and the movable comb 2220 may be staggered with each other. The fixed comb 2210 may include a plurality of first combs 2211, and the movable comb 2220 may include a plurality of second combs 2221. The first comb 2211 of the fixed comb 2210 may extend into a gap between two second combs 2221 of the movable comb 2220. The second comb 2221 of the movable comb 2220 may extend into a gap between two first combs 2211 of the fixed comb 2210. In other words, there is the second comb 2221 between two adjacent first combs 2211, and there is the first comb 2211 between two adjacent second combs 2221. There is a gap between the first comb 2211 and the second comb 2221 that are adjacent to each other, to generate capacitance.

The mechanical structure layer 220 may further include a first anchor area 2212 and a second anchor area 2213. The first anchor area 2212 and the second anchor area 2213 may belong to the stator 221 shown in FIG. 4. The first anchor area 2212 and the second anchor area 2213 may be integrally fastened relative to the inertial sensor 20. The first anchor area 2212 and the second anchor area 2213 may be connected to both ends of the movable comb 2220, and electrically connected to the movable comb 2220. The chip 21 may apply an alternating current signal to the first anchor area 2212 and the second anchor area 2213, and the movable comb 2220 may move relative to the fixed comb 2210 based on the alternating current signal. For example, the movable comb 2220 may move in a direction that is close to the first anchor area 2212 and that is away from the second anchor area 2213. For another example, the movable comb 2220 may move in a direction that is close to the second anchor area 2213 and that is away from the first anchor area 2212. Vibration directions of the movable comb 2220 may include a direction from the first anchor area 2212 to the second anchor area 2213 and a direction from the second anchor area 2213 to the first anchor area 2212.

The mechanical structure layer 220 may further include a first telescopic area 2222 and a second telescopic area 2223. The first telescopic area 2222 and the second telescopic area 2223 may belong to the mover 222 shown in FIG. 4. The first telescopic area 2222 may be connected between the first anchor area 2212 and a first end of the movable comb 2220, and the second telescopic area 2223 may be connected between the second anchor area 2213 and a second end of the movable comb 2220. When the movable comb 2220 is close to the first anchor area 2212 and is away from the second anchor area 2213, the first telescopic area 2222 may be compressed and the second telescopic area 2223 may be stretched. When the movable comb 2220 is close to the second anchor area 2213 and is away from the first anchor area 2212, the first telescopic area 2222 may be stretched and the second telescopic area 2223 may be compressed.

When the inertial sensor 20 is in the motion status, for example, the inertial sensor 20 is rotated or accelerated, the movable comb 2220 may move in a direction perpendicular to a drive direction of the movable comb 2220. For example, a part of the movable comb 2220 may have displacement in a direction perpendicular to a paper surface of FIG. 3D. With reference to FIG. 4 and FIG. 7, a spacing between the movable comb 2220 and the detection electrode 241 may change, to change the capacitance value of the capacitance generated by the movable comb 2220 and the detection electrode 241. For example, a center of the movable comb 2220 may be integrally fastened relative to the inertial sensor 20 by using the first anchor area 2212 and the second anchor area 2213, and a side that is of the movable comb 2220 and that is close to the fixed comb 2210 may be close to or away from the detection electrode 241. The first telescopic area 2222 and the second telescopic area 2223 may be correspondingly stretched or compressed.

In embodiments shown in FIG. 4 to FIG. 7, the cover layer 230 may not participate in an electrical connection between the chip 21 and the mechanical structure layer 220. In another possible embodiment, the cover layer 230 may alternatively participate in the electrical connection between the chip 21 and the mechanical structure layer 220. For example, the cover layer 230 may include a cover substrate and an electrical connector. The cover substrate is prepared by using the insulation material. The electrical connector may be disposed, for example, on a side that is of the cover substrate and that is close to the mechanical structure layer 220, and is electrically connected to the mechanical structure layer 220. The electrical connector may be, for example, a bonding connector. The electrical connector on the cover substrate may be, for example, an electrode, a line, or a pin. For a related description of the electrical connector at the cover layer 230, refer to a related description of the first electrical connector 212 at the substrate layer 210 in an embodiment provided in this application.

FIG. 8 is a schematic diagram of a structure of another inertial sensor 20 according to an embodiment of this application.

Similar to the inertial sensor 20 shown in FIG. 4, the inertial sensor 20 shown in FIG. 8 may include the chip 21 and the detection component 22. The detection component 22 may include the substrate layer 210, the mechanical structure layer 220, and the cover layer 230 that are stacked. The mechanical structure layer 220 may be located between the substrate layer 210 and the cover layer 230. The substrate layer 210 may be in a sealed connection to the mechanical structure layer 220, and the cover layer 230 may be in a sealed connection to the mechanical structure layer 220, to form an airtight cavity between the substrate layer 210 and the cover layer 230. The mechanical structure layer 220 may include the mover 222 and the stator 221, the stator 221 may be fastened to the substrate layer 210, and the mover 222 may move relative to the stator 221 in the airtight cavity between the substrate layer 210 and the cover layer 230. The substrate layer 210 may include the insulated substrate 211, and the first electrical connector 212 disposed on the substrate 211. The chip 21 may drive, by using the first electrical connector 212, the mover 222 to vibrate at a high frequency relative to the stator 221. The chip 21 may further obtain, by using the first electrical connector 212, a variation of a capacitance value of capacitance generated by the detection electrode 241 and the mover 222.

A difference between an embodiment shown in FIG. 4 and an embodiment shown in FIG. 8 is that the chip 21 may be disposed on a side that is of the substrate layer 210 and that is away from the mechanical structure layer 220. The substrate 211 may include the first electrical connector 212 and a second electrical connector 213. The first electrical connector 212 and the second electrical connector 213 are attached to two sides of the substrate 211. The first electrical connector 212 may be disposed on a side that is of the substrate 211 and that is close to the mechanical structure layer 220. The second electrical connector 213 may be disposed on a side that is of the substrate 211 and that is away from the mechanical structure layer 220. The substrate 211 may further include a via 214. The via 214 may penetrate the substrate 211, and is electrically connected between the first electrical connector 212 and the second electrical connector 213.

For a specific implementation of the first electrical connector 212, refer to a specific implementation of the first electrical connector 212 shown in FIG. 4.

The second electrical connector 213 may include the external pin 243. For example, the external pin 243 may be connected to the via 214. The external pin 243 may be disposed opposite to the via 214. The chip 21 may drive, by using the external pin 243, the via 214, and the first electrical connector 212, the mover 222 to vibrate relative to the stator 221, and obtain the variation of the capacitance value of the capacitance generated by the mover 222 and the detection electrode 241.

In some embodiments, the second electrical connector 213 may further include a line, and the line may be, for example, electrically connected between the via 214 and the external pin 243. In an embodiment, to protect the line, a line protection layer may further be disposed on the side that is of the substrate 211 and that is away from the mechanical structure layer 220. The line protection layer may be insulated. The line protection layer may wrap at least a part of a periphery of the line. For example, the line may be attached between the line protection layer and the substrate 211. The line protection layer may include a pin opening. The external pin 243 may be accommodated in the pin opening, and the line protection layer is exposed. This helps implement an electrical connection between the external pin 243 and the chip 21. To reduce a possibility that external pollutants enter the via 214, one component of the line, the external pin 243, or the line protection layer may cover the via, and the component may be in a sealed connection to the substrate 211.

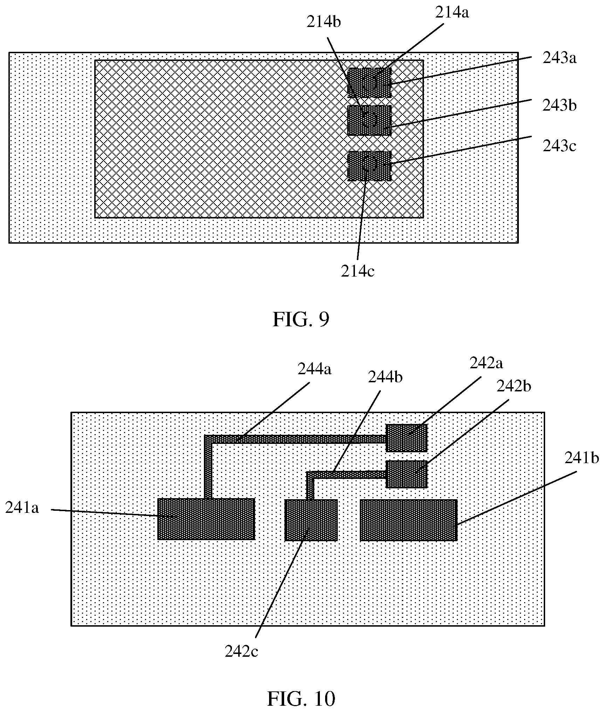

The inertial sensor 20 may be observed in a direction opposite to a Z direction shown in FIG. 8, to obtain a schematic diagram of a structure shown in FIG. 9 (the second electrical connector 213 and the via 214 on the substrate base 211 are shown by dotted lines). The first electrical connector 212 on the substrate 211 may be observed in the Z direction shown in FIG. 8, to obtain a schematic diagram of a structure shown in FIG. 10. It should be understood that the inertial sensor 20 shown in FIG. 9, the second electrical connector 213, or the first electrical connector 212 shown in FIG. 10 is merely an embodiment. Persons skilled in the art may easily deduce another possible structure based on the solutions provided in this application. For example, the first electrical connector 212 and the second electrical connector 213 may alternatively include more or few components.

It is assumed that the chip 21 may include a port a, a port b, and a port c. As shown in FIG. 9, the second electrical connector 213 at the substrate layer 210 may include the external pin 243a, the external pin 243b, and the external pin 243c. The external pin 243a may be electrically connected to the port a. The external pin 243b may be electrically connected to the port b. The external pin 243c may be electrically connected to the port c. In an embodiment shown in FIG. 9, a manner of an electrical connection between a port of the chip 21 and the external pin 243 may use, for example, a solder ball. The port of the chip 21 and the external pin 243 may alternatively be electrically connected by using an electrical connection wire, a conductive filler, a conductive adhesive, or the like.

As shown in FIG. 10, the first electrical connector 212 at the substrate layer 210 may further include the line 244a and the line 244b. The first electrical connector 212 at the substrate layer 210 may further include the detection electrode 241a, and the detection electrode 241b. The first electrical connector 212 at the substrate layer 210 may further include an internal pin 242a, an internal pin 242b, and an internal pin 242c. The line 244a may be electrically connected between the detection electrode 241a and the internal pin 242a. The line 244b may be electrically connected between the internal pin 242b and the internal pin 242c. The internal pin 242c may be electrically connected to the mechanical structure layer 220 shown in FIG. 4. With reference to FIG. 4, the detection electrode 241a may be disposed opposite to one mover 222 at the mechanical structure layer 220, and the detection electrode 241b may be disposed opposite to another mover 222 at the mechanical structure layer 220.

As shown in FIG. 9 and FIG. 10, the substrate layer 210 may further include a via 214a, a via 214b, and a via 214c. The via 214a may be electrically connected between the internal pin 242a and the external pin 243a. The via 214b may be electrically connected between the internal pin 242b and the external pin 243b. The via 214c may be electrically connected between the detection electrode 241b and the external pin 243c.

As shown in FIG. 9 and FIG. 10, the chip 21 may obtain a variation of a capacitance value of capacitance generated by the detection electrode 241a and the mover 222 at the mechanical structure layer 220 by using the external pin 243a, the via 214a, the internal pin 242a, the line 244a, the detection electrode 241a, the external pin 243b, the via 214b, the internal pin 242b, the line 244b, and the internal pin 242c. The chip 21 may obtain a variation of a capacitance value of capacitance generated by the detection electrode 241b and the mover 222 by using the external pin 243c, the via 214c, the detection electrode 241b, the external pin 243b, the via 214b, the internal pin 242b, the line 244b, and the internal pin 242c. The chip 21 may drive, by using the external pin 243b, the via 214b, the internal pin 242b, the line 244b, and the internal pin 242c, the mover 222 to move relative to the stator 221 at the mechanical structure layer 220.

In embodiments shown in FIG. 8 to FIG. 10, the external pin 243 of the inertial sensor 20 may be disposed in correspondence with the port of the chip 21 by using a line on the first electrical connector 212 and/or a line on the second electrical connector 213. This may help implement a stable fastening and connection manner between the external pin 243 of the inertial sensor 20 and the port of the chip 21, for example, a manner of the solder ball, the conductive filler, or the adhesive is used.

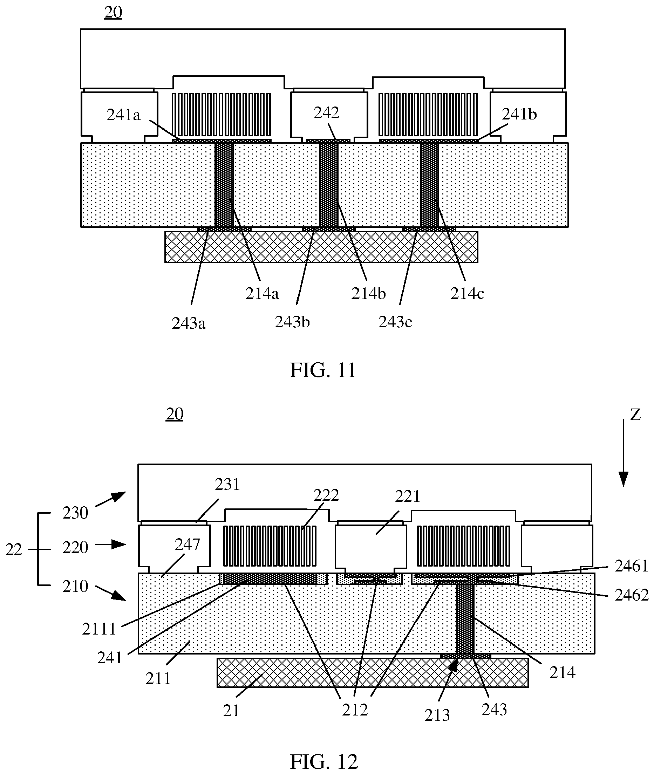

FIG. 11 is a schematic diagram of a structure of still another inertial sensor 20 according to an embodiment of this application. A slight difference between the inertial sensor 20 shown in FIG. 11 and an inertial sensor 20 shown in FIG. 8 to FIG. 10 is that the via 214a may be connected between the detection electrode 241a and the external pin 243a, the via 214b may be connected between the internal pin 242 and the external pin 243b, and the via 214c may be connected between the detection electrode 241b and the external pin 243c. In other words, when necessary, in an electrical connection relationship between the first electrical connector 212 and the second electrical connector 213, an unnecessary line, an unnecessary internal pin, or the like may be omitted to reduce impedance of an inertial sensor.

In embodiments shown in FIG. 8 to FIG. 11, the cover layer 230 may not participate in an electrical connection between the chip 21 and the mechanical structure layer 220. In another possible embodiment, the cover layer 230 may alternatively participate in the electrical connection between the chip 21 and the mechanical structure layer 220. For example, the cover layer 230 may include a cover substrate, an electrical connector 1, and an electrical connector 2. The cover substrate is prepared by using an insulation material. The electrical connector 1 may be disposed, for example, on a side that is of the cover substrate and that is close to the mechanical structure layer 220, and is electrically connected to the mechanical structure layer 220. The electrical connector 2 may be disposed on a side that is of the substrate and that is away from the mechanical structure layer 220. The cover layer 230 may further include a via that penetrates the cover substrate. The via that penetrates the cover substrate may be electrically connected between the electrical connector 1 and the electrical connector 2. The electrical connector 1 or the electrical connector 2 may include, for example, one or more of the following: an electrode, a line, or a pin. For a related description of the electrical connector 2 at the cover layer 230, refer to a related description of the second electrical connector 213 at the substrate layer 210 in an embodiment provided in this application. For a related description of the via at the cover layer 230, refer to a related description of the via 214 at the substrate layer 210 in an embodiment provided in this application.

FIG. 11 is a schematic diagram of a structure of yet another inertial sensor 20 according to an embodiment of this application.

Similar to the inertial sensor 20 shown in FIG. 8, the inertial sensor 20 shown in FIG. 11 may include the chip 21 and the detection component 22. The detection component 22 may include the substrate layer 210, the mechanical structure layer 220, and the cover layer 230 that are stacked. The mechanical structure layer 220 may be located between the substrate layer 210 and the cover layer 230. The substrate layer 210 may be in a sealed connection to the mechanical structure layer 220, and the cover layer 230 may be in a sealed connection to the mechanical structure layer 220, to form an airtight cavity between the substrate layer 210 and the cover layer 230. The mechanical structure layer 220 may include the mover 222 and the stator 221, the stator 221 may be fastened to the substrate layer 210, and the mover 222 may move relative to the stator 221 in the airtight cavity between the substrate layer 210 and the cover layer 230. The substrate layer 210 may include the insulated substrate 211, may further include the first electrical connector 212 and the second electrical connector 213 that are disposed on two sides of the substrate 211, and may further include the via 214 that is electrically connected between the first electrical connector 212 and the second electrical connector 213. The chip 21 may be disposed on a side that is of the substrate layer 210 and that is away from the mechanical structure layer 220. The chip 21 may drive, by using the second electrical connector 213, the via 214, and the first electrical connector 212, the mover 222 to vibrate at a high frequency relative to the stator 221. The chip 21 may further obtain, by using the first electrical connector 212, the via 214, and the second electrical connector 213, a variation of a capacitance value of capacitance generated by the detection electrode 241 and the mover 222.

A difference between an embodiment shown in FIG. 11 and an embodiment shown in FIG. 8 is that the first electrical connector 212 may include a plurality of conductive layers that are stacked. The plurality of conductive layers may include, for example, a first conductive layer 2461 and a second conductive layer 2462. The first conductive layer 2461 may include one or more of the following: a detection electrode, a line, an internal pin, or an external pin. The second conductive layer 2462 may be a line. The first conductive layer 2461 may be disposed on a side that is of the second conductive layer 2462 and that is close to the mechanical structure layer 220. The first conductive layer 2461 may include a first part of a line of the first electrical connector 212, and the second conductive layer 2462 may include a second part of the line of the first electrical connector 212.

In some embodiments, the substrate layer 210 may further include a line protection layer 247. The line protection layer 247 may be insulated. The line may be attached to a side that is of the substrate 211 and that is close to the mechanical structure layer 220. The line protection layer 247 may wrap at least a part of a periphery of the first electrical connector 212. The line protection layer 247 may be exposed on a side that is of the plurality of conductive layers of the first electrical connector 212 and that is close to the mechanical structure layer 220. A part (for example, a part of the first conductive layer 2461) of the first electrical connector 212 that exposes outside the line protection layer 247 may be electrically connected to another component (for example, the mechanical structure layer 220, and for another example, the chip 21). Alternatively, a part of the first electrical connector 212 that exposes outside the line protection layer 247 may generate capacitance with the mover 222. An unexposed part (for example, the second conductive layer 2462) of the first electrical connector 212 may be encapsulated in the line protection layer 247, to reduce a possibility that the first electrical connector 212 is oxidized.

As shown in FIG. 11, the first conductive layer 2461 may be a conductive layer that is of the first electrical connector 212 and that is closest to the mechanical structure layer 220. The line protection layer 247 may wrap an end face that is of the first conductive layer 2461 and that is close to the substrate 211, and a side surface of the first conductive layer 2461. The line protection layer 247 may be at least partially exposed on an end face that is of the first conductive layer 2461 and that is close to the mechanical structure layer 220. For example, the detection electrode 241, the external pin, or the internal pin may be exposed outside the line protection layer 247. The second conductive layer 2462 may be attached between the substrate base 211 and the line protection layer 247. The line protection layer 247 may cover and wrap the second conductive layer 2462 to protect the second conductive layer 2462.

In some embodiments, the substrate 211 may include a first substrate groove 2111. The first electrical connector 212 may be partially or entirely accommodated in the first substrate groove 2111. Because the first electrical connector 212 may be at least partially accommodated in the first substrate groove 2111, space (especially space occupied in a thickness direction) occupied by the first electrical connector 212 in the detection component 22 may be small. The first electrical connector 212 may be at least partially accommodated in the first substrate groove 2111. This facilitates an increase of a thickness of the first electrical connector 212, helps reduce impedance of the first electrical connector 212, and further helps improve detection performance of the inertial sensor 20. The first substrate groove 2111 may provide accommodation space for the first electrical connector 212, which helps flexibly design structure parameters such as a thickness of the first electrical connector 212 and arrangement of the first electrical connector 212, so that the first electrical connector 212 is provided with the plurality of conductive layers. Therefore, the first substrate groove 2111 is disposed on the substrate 211, so that line arrangement of the first electrical connector 212 may be sparse.

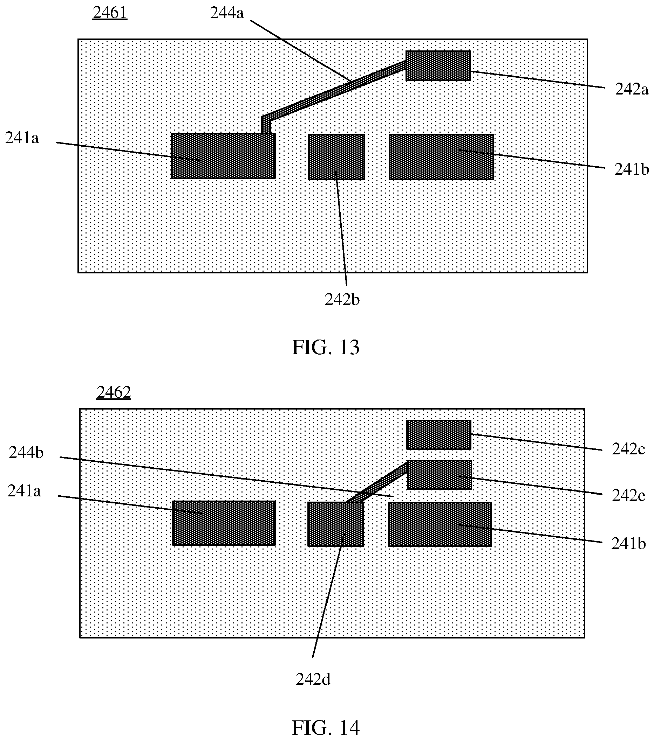

The first conductive layer 2461 of the first electrical connector 212 may be observed in a Z direction shown in FIG. 12, to obtain a schematic diagram of a structure shown in FIG. 13. The second conductive layer 2462 of the first electrical connector 212 may be observed in the Z direction shown in FIG. 12, to obtain a schematic diagram of a structure shown in FIG. 14. In embodiments shown in FIG. 12 to FIG. 14, the first electrical connector 212 may include two conductive layers: the first conductive layer 2461 and the second conductive layer 2462. The first conductive layer 2461 may be a conductive layer that is closest to the mechanical structure layer 220. For a structure of the second electrical connector 213 and a structure of the via 214 shown in FIG. 11, refer to an embodiment shown in FIG. 9. It should be understood that the first electrical connector 212 shown in FIG. 13 and FIG. 14 is merely an embodiment. Persons skilled in the art may easily deduce another possible structure based on the solutions provided in this application. For example, the first electrical connector 212 may alternatively include more or few components.

It is assumed that the chip 21 may include the port a, the port b, and the port c. The second electrical connector 213 at the substrate layer 210 may include an external pin a, an external pin b, and an external pin c. The external pin a may be electrically connected to the port a. The external pin b may be electrically connected to the port b. The external pin c may be electrically connected to the port c. A manner of an electrical connection between a port of the chip 21 and an external pin may use, for example, a solder ball. The port of the chip 21 and the external pin may alternatively be electrically connected by using an electrical connection wire, a conductive filler, a conductive adhesive, or the like.

As shown in FIG. 13 and FIG. 14, the first electrical connector 212 may include the line 244a, the line 244b, the internal pin 242a, the internal pin 242b, the internal pin 242c, an internal pin 242d, an internal pin 242e, the detection electrode 241a, and the detection electrode 241b. The substrate layer 210 may further include a via a, a via b, and a via c. The via a may be electrically connected between the internal pin 242c and the external pin a. The via b may be electrically connected between the internal pin 242e and the external pin b. The via c may be electrically connected between the detection electrode 241b and the external pin c.

The detection electrode 241a may occupy the first conductive layer 2461 and the second conductive layer 2462. The line 244a and the internal pin 242a may occupy the first conductive layer 2461. The internal pin 242c may occupy the second conductive layer 2462. The line 244a may be electrically connected between the detection electrode 241a and the internal pin 242a. The internal pin 242a may be disposed opposite to the internal pin 242c, and the internal pin 242a may be electrically connected to the internal pin 242c.

The internal pin 242b may occupy the first conductive layer 2461. With reference to FIG. 12, the internal pin 242b may be electrically connected to the mechanical structure layer 220. The line 244b, the internal pin 242d, and the internal pin 242e may occupy the second conductive layer 2462. The line 244b may be electrically connected between the internal pin 242d and the internal pin 242e. The internal pin 242b may be disposed opposite to the internal pin 242d, and the internal pin 242b may be electrically connected to the internal pin 242d.

The detection electrode 241b may occupy the first conductive layer 2461 and the second conductive layer 2462.

The chip 21 may obtain a variation of a capacitance value of capacitance generated by the detection electrode 241a and the mover 222 at the mechanical structure layer 220 by using the external pin a, the via a, the internal pin 242c, the internal pin 242a, the line 244a, the detection electrode 241a, the external pin b, the via b, the internal pin 242e, the line 244b, the internal pin 242d, and the internal pin 242b. The chip 21 may obtain a variation of a capacitance value of capacitance generated by the detection electrode 241b and the mover 222 by using the external pin c, the via c, the detection electrode 241b, the external pin b, the via b, the internal pin 242e, the line 244b, the internal pin 242d, and the internal pin 242b. The chip 21 may drive, by using the external pin b, the via b, the internal pin 242e, the line 244b, the internal pin 242d, and the internal pin 242b, the mover 222 to move relative to the stator 221 at the mechanical structure layer 220.

The plurality of conductive layers may facilitate an implementation of a line jumper, thereby facilitating flexible wiring. To improve or maintain capacitance detection performance of the inertial sensor 20, a spacing between lines should not be excessively small. In comparison with a single-layer first electrical connector 212, a line arrangement density of the first electrical connector 212 that is provided with the plurality of conductive layers may be sparse. This helps improve or maintain the capacitance detection performance of the inertial sensor 20.

In embodiments shown in FIG. 12 to FIG. 14, the cover layer 230 may not participate in an electrical connection between the chip 21 and the mechanical structure layer 220. In another possible embodiment, the cover layer 230 may alternatively participate in the electrical connection between the chip 21 and the mechanical structure layer 220. For example, the cover layer 230 may include a cover substrate and an electrical connector. The cover substrate is prepared by using an insulation material. The electrical connector may be disposed, for example, on a side that is of the cover substrate and that is close to the mechanical structure layer 220, and is electrically connected to the mechanical structure layer 220. The electrical connector includes, for example, the plurality of conductive layers. In some embodiments, the cover substrate may include a second substrate groove. The electrical connector on the cover substrate may be at least partially accommodated in the second substrate groove. In another embodiment, the cover layer 230 may further include a line protection layer. The line protection layer may wrap at least a part of a periphery of the electrical connector. For a related description at the cover layer 230, refer to another embodiment provided in this application. Details are not described herein again.

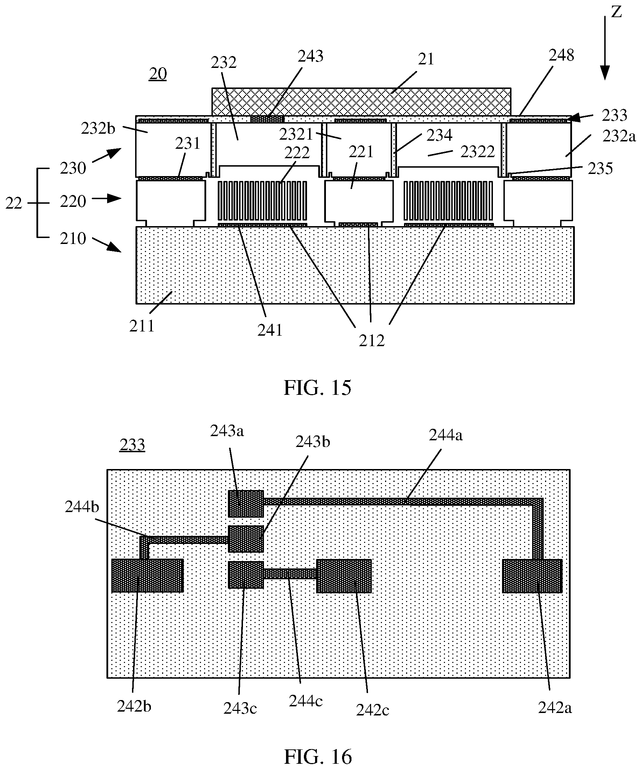

FIG. 15 is a schematic diagram of a structure of still yet another inertial sensor 20 according to an embodiment of this application.

Similar to the inertial sensor 20 shown in FIG. 4, the inertial sensor 20 shown in FIG. 15 may include the chip 21 and the detection component 22. The detection component 22 may include the substrate layer 210, the mechanical structure layer 220, and the cover layer 230 that are stacked. The mechanical structure layer 220 may be located between the substrate layer 210 and the cover layer 230. The substrate layer 210 may be in a sealed connection to the mechanical structure layer 220, and the cover layer 230 may be in a sealed connection to the mechanical structure layer 220, to form an airtight cavity between the substrate layer 210 and the cover layer 230. The mechanical structure layer 220 may include the mover 222 and the stator 221, the stator 221 may be fastened to the substrate layer 210, and the mover 222 may move relative to the stator 221 in the airtight cavity between the substrate layer 210 and the cover layer 230. The substrate layer 210 may include the insulated substrate 211, and the first electrical connector 212 disposed on the substrate 211. The chip 21 may be disposed on a side that is of the cover layer 230 and that is away from the mechanical structure layer 220. The chip 21 may drive, by using the first electrical connector 212, the mover 222 to vibrate at a high frequency relative to the stator 221. The chip 21 may further obtain, by using the first electrical connector 212, a variation of a capacitance value of capacitance generated by the detection electrode 241 and the mover 222.

A difference between an embodiment shown in FIG. 4 and an embodiment shown in FIG. 15 is that the chip 21 may drive, by using the cover layer 230 and the first electrical connector 212, the mover 222 to vibrate at a high frequency relative to the stator 221, and/or obtain the variation of the capacitance value of the capacitance generated by the detection electrode 241 and the mover 222.

The cover layer 230 may include a cover substrate 232. The cover substrate 232 may be prepared by using a conductor material. For example, the cover substrate 232 and mechanical structure layer 220 may use conductor materials of a same type. In some embodiments, a coefficient of thermal expansion of the cover substrate 232 may be close to a coefficient of thermal expansion of the mechanical structure layer 220. The cover layer 230 is in a sealed connection to the mechanical structure layer 220 through bonding, for example, anodic bonding or eutectic bonding.

For example, as shown in FIG. 15, both the cover substrate 232 and the mechanical structure layer 220 may be prepared by using a material of monocrystalline silicon. The cover substrate 232 is in a sealed connection to the mechanical structure layer 220 through eutectic bonding. There may be the bonding connector 231 between the cover substrate 232 and the mechanical structure layer 220. The bonding connector 231 may be the conductor material. The cover substrate 232 may be electrically connected to the mechanical structure layer 220 by using the bonding connector 231. The bonding connector 231 may be, for example, made of a metal material. The bonding connector 231 may be an internal pin on the cover substrate 232, and is configured to implement an electrical connection between the cover substrate 232 and the mechanical structure layer 220.

The cover layer 230 may alternatively include a third electrical connector 233 disposed on the cover substrate 232. The third electrical connector 233 may be attached to a side that is of the cover substrate 232 and that is close to the chip 21. The third electrical connector 233 may include an external pin that is electrically connected to the chip 21. The third electrical connector 233 may alternatively include a line and/or a detection electrode. The chip 21 may be electrically connected to the cover substrate 232 by using the third electrical connector 233. Because the cover substrate 232 is electrically connected to the mechanical structure layer 220, the chip 21 and the mechanical structure layer 220 may be conducted.

For example, the third electrical connector 233 may transmit an electrical signal from the chip 21 to the mover 222 and some stators 221 at the mechanical structure layer 220, so that the mover 222 at the mechanical structure layer 220 moves relative to the stator 221. For another example, a signal from the detection electrode 241 may be transmitted to the chip 21 by using the cover substrate 232 and the third electrical connector 233, so that the chip 21 may obtain a signal related to a motion status of the inertial sensor 20. In an embodiment shown in FIG. 15, the detection electrode 241 may be disposed on a side that is of the substrate 211 and that is away from the mechanical structure layer 220. In another possible embodiment, the detection electrode 241 may be disposed on the stator 221 at the mechanical structure layer 220, and may alternatively be disposed on a side that is of the cover layer 230 and that is close to the mechanical structure layer 220.

The third electrical connector 233 may include a plurality of external pins 243. The plurality of external pins 243 may be correspondingly electrically connected to a plurality of parts of the cover substrate 232, respectively. In other words, any one of the external pins 243 may be electrically connected to a corresponding part of the cover substrate 232, and may be disconnected from other parts of the cover substrate 232. To disconnect the plurality of parts of the cover substrate 232, that is, the plurality of parts of the cover substrate 232 are not conducted, the mechanical structure layer 220 may alternatively include an insulation part 234 for spacing the plurality of parts of the cover substrate 232. The insulation part 234 may be configured to penetrate the cover substrate 232.

It is assumed that one external pin 243 of the third electrical connector 233 may be electrically connected to a first part 2321 of the cover substrate 232, and may be disconnected from a second part 2322 of the cover substrate 232. The first part 2321 of the cover substrate 232 may be electrically connected to the mechanical structure layer 220, and the second part 2322 of the cover substrate 232 may be disconnected from the mechanical structure layer 220. The insulation part 234 at the cover layer 230 may be located between the first part 2321 of the cover substrate 232 and the second part 2322 of the cover substrate 232, to space the first part 2321 of the cover substrate 232 and the second part 2322 of the cover substrate 232. This helps prevent a short circuit or conduction between the first part 2321 of the cover substrate 232 and the second part 2322 of the cover substrate 232.

The mechanical structure layer 220 may be in a sealed connection to the cover layer 230 by using the bonding connector 231. A bonding part at the mechanical structure layer 220 and a bonding part at the cover layer 230 may be heated at a high temperature to form the bonding connector 231. The bonding connector 231 may flow arbitrarily during processing. There is a possible case in which the bonding connector 231 may be connected, across the insulation part 234, between the first part 2321 and the second part 2322 of the cover substrate 232. The first part 2321 and the second part 2322 of the cover substrate 232 may be located on two sides of the insulation part 234.

To prevent the first part 2321 and the second part 2322 of the cover substrate 232 from being conducted by using the bonding connector 231, the cover substrate 232 may further include an overflow groove 235. The overflow groove 235 may be located between the insulation part 234 and the first part 2321 of the cover substrate 232. The bonding connector 231 may preferentially flow into the overflow groove 235 at a high temperature. This helps reduce a possibility that the bonding connector 231 flows from the first part 2321 of the cover substrate 232 to the second part 2322 of the cover substrate 232, and further helps reduce a possibility that the first part 2321 of the cover substrate 232 and the second part 2322 of the cover substrate 232 are conducted.

In some embodiments, the cover layer 230 may further include a line protection layer 248. The line protection layer 248 may be disposed on the side that is of the cover substrate 232 and that is close to the chip 21. The line protection layer 248 may be insulated. The line protection layer 248 may wrap at least a part of a periphery of the third electrical connector 233. For example, the line of the third electrical connector 233 may be attached between the line protection layer 248 and the substrate 211. The line protection layer 248 may include a pin opening. The external pin 243 of the third electrical connector 233 may be accommodated in the pin opening, and the line protection layer 248 is exposed. This helps implement an electrical connection between a pin and the chip 21, or an electrical connection between a pin and the mechanical structure layer 220.

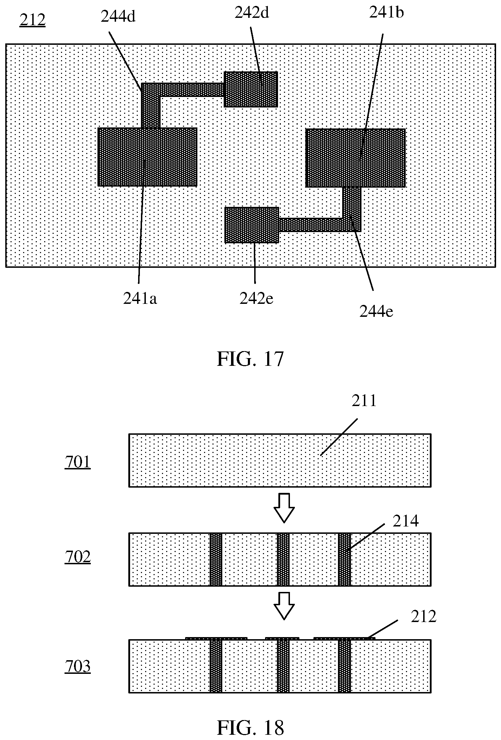

The third electrical connector 233 may be observed in a Z direction shown in FIG. 15, to obtain a schematic diagram of a structure shown in FIG. 16. The first electrical connector 212 may be observed in the Z direction shown in FIG. 15, to obtain a schematic diagram of a structure shown in FIG. 17. It should be understood that the third electrical connector 233 shown in FIG. 16 and the first electrical connector 212 shown in FIG. 17 are merely embodiments. Persons skilled in the art may easily deduce another possible structure based on the solutions provided in this application. For example, the first electrical connector 212 and the third electrical connector 233 may alternatively include more or few components.

It is assumed that the chip 21 may include a port 1, a port 2, and a port 3. The third electrical connector 233 at the mechanical structure layer 220 may include the external pin 243a, the external pin 243b, and the external pin 243c. The external pin 243a may be electrically connected to the port 1. The external pin 243b may be electrically connected to the port 2. The external pin 243c may be electrically connected to the port 3. A manner of an electrical connection between a port of the chip 21 and the external pin 243 may include, for example, a solder ball, an electrical connection wire, a conductive filler, or a conductive adhesive.

The third electrical connector 233 may further include the line 244a, the line 244b, and the line 244c. The third electrical connector may further include the internal pin 242a, the internal pin 242b, and the internal pin 242c. The line 244a may be electrically connected between the internal pin 242a and the external pin 243a. The line 244b may be electrically connected between the internal pin 242b and the external pin 243b. The line 244c may be electrically connected between the internal pin 242c and the external pin 243c. The internal pin 242b and the internal pin 242c may be, for example, a bonding connector.

With reference to FIG. 15, the cover substrate 232 may include the part 2321, a part 232a, and a part 232b. The insulation part 234 is disposed in the cover substrate 232, to disconnect the part 2321, the part 232a, and the part 232b from each other. The part 2321 of the cover substrate 232 may be connected to the internal pin 242c. The part 232a of the cover substrate 232 may be connected to the internal pin 242a. The part 232b of the cover substrate 232 may be connected to the internal pin 242b.

The mechanical structure layer 220 may include a conductive part a, a conductive part 220, and a conductive part c. The first electrical connector 212 may include the internal pin 242d and the internal pin 242e. The conductive part a at the mechanical structure layer 220 may be electrically connected between the internal pin 242a and the internal pin 242e. The conductive part b at the mechanical structure layer 220 may be electrically connected between the internal pin 242b and the internal pin 242d. The conductive part c at the mechanical structure layer 220 may be electrically connected to the internal pin 242c.

The first electrical connector 212 may further include the detection electrode 241a, the detection electrode 241b, a line 244d, and a line 244e. The line 244d may be electrically connected between the internal pin 242d and the detection electrode 241a. The line 244e may be electrically connected between the internal pin 242e and the detection electrode 241b.

The chip 21 may obtain a variation of a capacitance value of capacitance generated by the detection electrode 241a and the mover 222 at the mechanical structure layer 220 by using the external pin b, the line 244b, the internal pin 242b, a part 220b at the mechanical structure layer 220, the internal pin 242d, the line 244d, the detection electrode 241a, the external pin c, the line 244c, the internal pin 242c, and a part 220c at the mechanical structure layer 220. The chip 21 may obtain a variation of a capacitance value of capacitance generated by the detection electrode 241b and the mover 222 at the mechanical structure layer 220 by using the external pin a, the line 244a, the internal pin 242a, a part 220a at the mechanical structure layer 220, the internal pin 242e, the line 244e, the detection electrode 241b, the external pin c, the line 244c, the internal pin 242c, and the part 220c at the mechanical structure layer 220. The chip 21 may drive, by using the external pin c, the line 244c, the internal pin 242c, and the part 220c at the mechanical structure layer 220, the mover 222 to move relative to the stator 221 at the mechanical structure layer 220.

In embodiments shown in FIG. 15 to FIG. 17, both the cover layer 230 and the substrate layer 210 may participate in an electrical connection between the chip 21 and the mechanical structure layer 220. This helps improve wiring flexibility of an inertial sensor.

To enable persons skilled in the art to know a processing process of the inertial sensor 20 provided in embodiments of this application, a processing process of the inertial sensor 20 shown in FIG. 11 is described in embodiments of this application by using embodiments shown in FIG. 18 to FIG. 22. For a processing process of another inertial sensor 20 provided in embodiments of this application, refer to embodiments shown in FIG. 18 to FIG. 22.

FIG. 18 is a flowchart of a processing process of the substrate layer 210 of the inertial sensor 20.

701: Obtain the insulated substrate 211.

702: Process a via on the substrate 211, and dispose a conductor material in the via, to form the via 214 that penetrates the substrate 211.

The via is processed on the substrate 211 by using, for example, a through glass via (through glass via, TGV) process.

The conductor material may include, for example, a metal such as copper, tungsten, silver, gold, aluminum, germanium, or lithium. The conductor material may include, for another example, an organic conductor material. In an embodiment, the conductor material may be filled in the via. In another embodiment, the conductor material may be attached to an inner wall of the via.

703: Dispose the first electrical connector 212 on one side of the substrate 211, and the first electrical connector 212 is attached to the via 214 of the substrate 211.

The first electrical connector 212 may be in a sealed connection to the substrate 211, to help prevent the external air from passing through a connection area between the first electrical connector 212 and the substrate 211, and further help reduce a possibility that pollution occurs in the inertial sensor 20. The first electrical connector 212 may include one or more conductive layers. A process of attaching the first electrical connector 212 to the substrate 211 may include, for example, but is not limited to, vapor deposition, sputtering, or lift-off (lift-off).

In some embodiments, a first line protection layer may further be processed on a side that is of the first electrical connector 212 and that is away from the substrate 211. The first line protection layer may include, but is not limited to, a nitride (nitride). For example, through deposition, the first line protection layer may be disposed on a part of the substrate 211 and a part of the first electrical connector 212. Another part of the first electrical connector 212 may be exposed outside the first line protection layer. The part of the first electrical connector 212 that is exposed outside the first line protection layer may include a conductive plating layer. The conductive plating layer includes, but is not limited to, an alloy such as gold or lithium. The conductive plating layer may help reduce a possibility that an unexposed part of the first electrical connector 212 is oxidized.

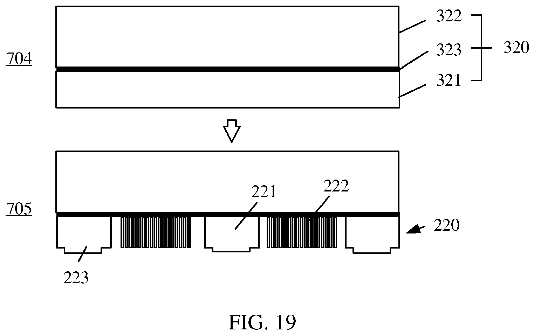

FIG. 19 is a flowchart of a processing process of the mechanical structure layer 220 of the inertial sensor 20.

704: Obtain a mechanical structure layer raw material 320, the mechanical structure layer raw material 320 includes a first raw material layer 321, a second raw material layer 322, and a raw material connection layer 233, and the first raw material layer 321 and the second raw material layer 322 are connected by using the raw material connection layer 233.

704 may be considered, for example, as a silicon-on-insulator (silicon-on-insulator, SOI).

A material of the raw material connection layer 233 may be different from a material of the first raw material layer 321 and a material of the second raw material layer 322. In some embodiments, an etching efficiency (or a removal efficiency) of the first raw material layer 321 and an etching efficiency (or a removal efficiency) of the second raw material layer 322 may be higher than an etching efficiency of the raw material connection layer 233. For example, the first raw material layer 321 and the second raw material layer 322 may be made mainly of monocrystalline silicon or polycrystalline silicon, and the raw material connection layer 233 may be made mainly of glass. A manner of bonding between the raw material connection layer 233 and the first raw material layer 321 may be, for example, anodic bonding. Similarly, a manner of bonding between the raw material connection layer 233 and the second raw material layer 322 may be, for example, anodic bonding.

705: Etch the first raw material layer 321 on a side that is of the first raw material layer 321 of the mechanical structure layer raw material 320 and that is away from the second raw material layer 322, to form the mechanical structure layer 220.

For example, the mechanical structure layer 220 may include a first connection end 223, the mover 222, and the stator 221. In a first round of etching, a shallow groove is etched at the first raw material layer 321, to form the first connection end 223 at the mechanical structure layer 220. In a second round of etching, a deep groove is etched at the first raw material layer 321, to form the mover 222 and the stator 221 at the mechanical structure layer 220. After the raw material connection layer 233 is etched, an etching process may be terminated.

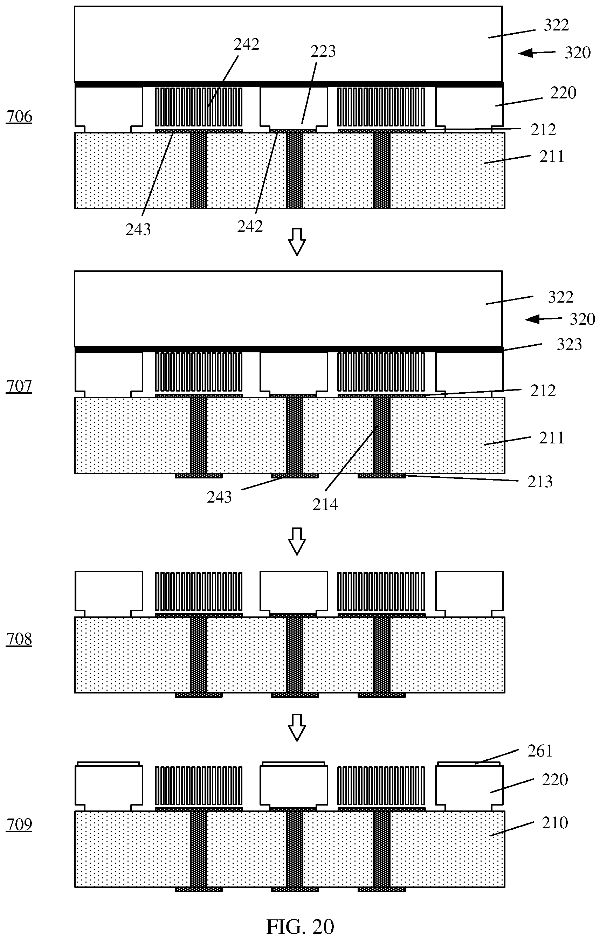

FIG. 20 is a flowchart of an assembly process of the mechanical structure layer 220 and the substrate layer 210 of the inertial sensor 20.

706: Connect, through bonding, the mechanical structure layer 220 of the mechanical structure layer raw material 320 to a side that is of the substrate 211 and on which the first electrical connector 212 is disposed.

A side that is of the mechanical structure layer 220 and that is away from the second raw material layer 322 may be connected to the substrate 211 through bonding. A manner of bonding between the mechanical structure layer 220 and the substrate 211 includes, for example, anodic bonding.

707: Dispose the second electrical connector 213 on a side that is of the substrate 211 and that is away from the first electrical connector 212, and the second electrical connector 213 is attached to the via 214 of the substrate 211. The second electrical connector 213 may include the external pin 243 that is configured to electrically connect to the chip 21.

The second electrical connector 213 may be in a sealed connection to the substrate 211, to help prevent the external air from passing through the via 214, and further help reduce a possibility that pollution occurs in the inertial sensor 20. The second electrical connector 213 may include one or more conductive layers. A process of attaching the second electrical connector 213 to the substrate 211 may include, for example, but is not limited to, vapor deposition, sputtering, or lift-off (lift-off).

In some embodiments, a second line protection layer may further be processed on a side that is of the second electrical connector 213 and that is away from the substrate 211. The second line protection layer may include, but is not limited to, the nitride (nitride). For example, through deposition, the second line protection layer may be disposed on a part of the substrate 211 and a part of the second electrical connector 213. Another part of the second electrical connector 213 may be exposed outside the second line protection layer. The part of the second electrical connector 213 that is exposed outside the second line protection layer may include the conductive plating layer. The conductive plating layer includes, but is not limited to, the alloy such as gold or lithium. The conductive plating layer may help reduce a possibility that an unexposed part of the second electrical connector 213 is oxidized.

708: Remove the second raw material layer 322 and the raw material connection layer 233 that are of the mechanical structure layer raw material 320.

For example, etching may be performed one or more times to remove the second raw material layer 322 and the raw material connection layer 233.

707: Dispose a first bonding part 261 on a side that is of the mechanical structure layer 220 and that is away from the substrate layer 210.

The first bonding part 261 may be attached to a side that is of the mechanical structure layer 220 and that is away from the substrate layer 210 by using a process, for example, vapor deposition, sputtering, or lift-off. The first bonding part 261 may include, for example, the metal.

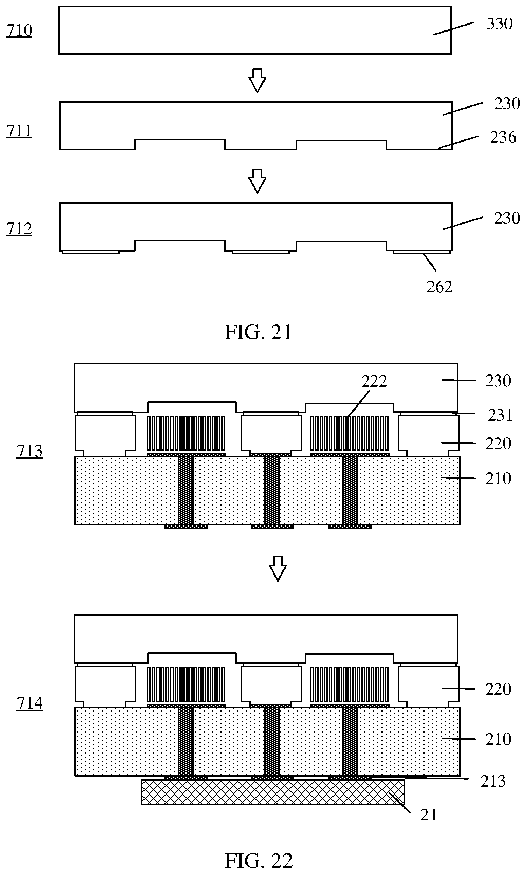

FIG. 21 is a flowchart of an assembly process of the mechanical structure layer 220 and the substrate layer 210 of the inertial sensor 20.

710: Obtain a cover layer raw material 330.

A material type of the cover layer raw material 330 may be, for example, the same as a material type of the mechanical structure layer raw material 320.

711: Etch the cover layer raw material 330 on a side of the cover layer raw material 330, to form the cover layer 230.

For example, the cover layer 230 may include a second connection end 236. A shallow groove is etched on the cover layer raw material 330, to form the second connection end 236 at the cover layer 230.

712: Dispose a second bonding part 262 on an etched side that is of the cover layer 230.

The second bonding part 262 may be attached to the cover layer 230 by using the process, for example, vapor deposition, sputtering, or lift-off. The second bonding part 262 may include, for example, the metal. In some embodiments, a material type of the first bonding part 261 shown in FIG. 7C may be, for example, the same as a material type of the second bonding part 262.

FIG. 22 is a flowchart of an assembly process of the cover layer 230, the mechanical structure layer 220, the substrate layer 210, and the chip 21 of the inertial sensor 20.

713: Connect, through bonding, the first bonding part 261 to the second bonding part 262, to form the bonding connector 231 between the cover layer 230 and the mechanical structure layer 220, and the bonding connector 231 is in a sealed connection between the cover layer 230 and the mechanical structure layer 220.

A manner of bonding between the first bonding part 261 and the second bonding part 262 includes, but is not limited to, anodic bonding, eutectic bonding, or the like. Because the mechanical structure layer 220 is in a sealed connection between the substrate layer 210 and the cover layer 230, the mover 222 at the mechanical structure layer 220 may move in a sealed cavity. This helps prevent external pollutants from entering the cavity including the cover layer 230, the mechanical structure layer 220, and the substrate layer 210, and further helps maintain detection precision of the inertial sensor 20.

714: Dispose the chip 21 on a side that is of the substrate layer 210 and that is away from the mechanical structure layer 220, and a port of the chip 21 is electrically connected to the second electrical connector 213 at the substrate layer 210.

A manner of an electrical connection between the port of the chip 21 and the second electrical connector 213 at the substrate layer 210 may include, but is not limited to, a solder ball, a conductive filler, a conductive adhesive, an electrical connection wire, or the like.

An embodiment of this application provides an inertial sensor, an electronic device, and a processing method of the inertial sensor. An insulated substrate material is used. This helps reduce a possibility that capacitance is generated by a substrate layer. A via is disposed at an insulated substrate layer, so that flexibility of an electrical connection between a chip and a detection component is improved. For example, the chip and the detection component may be electrically connected without using or rarely using an electrical connection wire. Connection stability of the electrical connection wire is weak, and the electrical connection wire occupies more space in the electronic device. An application of the electrical connection wire in the inertial sensor is reduced, to help improve stability of the electrical connection between the chip and the detection component, and further help reduce space occupied by the inertial sensor in the electronic device.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. An inertial sensor (20), comprising a substrate layer (210), a mechanical structure layer (220), and a cover layer (230) that are stacked, wherein the mechanical structure layer (220) is in a sealed connection between the substrate layer (210) and the cover layer (230);
the substrate layer (210) comprises a substrate (211), wherein the substrate (211) is an insulator, the mechanical structure layer (220) is in a sealed connection to the substrate (211) to form a sealing connection part (215) between the mechanical structure layer (220) and the substrate (211), and the sealing connection part (215) is an insulator;
the substrate layer (210) further comprises a first electrical connector (212), wherein the first electrical connector (212) is attached to a side that is of the substrate (211) and that is close to the mechanical structure layer (220), and the first electrical connector (212) comprises an internal pin (242); and
a first end face of the internal pin (242) is in contact with the substrate (211), a second end face of the internal pin (242) is in contact with the mechanical structure layer (220), a side surface of the internal pin (242) is connected between the first end face and the second end face, the side surface of the internal pin (242) is in contact with the sealing connection part (215), and the internal pin (242) is electrically connected to the mechanical structure layer (220).

2. The inertial sensor (20) according to claim 1, wherein the substrate (211) comprises a substrate groove (2111), and the first electrical connector (212) is at least partially accommodated in the substrate groove (2111).

3. The inertial sensor (20) according to claim 1 or 2, wherein the substrate layer (210) further comprises a line protection layer (247), the line protection layer (247) is disposed on the side that is of the substrate (211) and that is close to the mechanical structure layer (220), and is located in a cavity formed through the sealed connection between the mechanical structure layer (220) and the substrate (211), and the line protection layer (247) wraps a part of a periphery of the first electrical connector (212).

4. The inertial sensor (20) according to any one of claims 1 to 3, wherein the first electrical connector (212) comprises a first conductive layer (2461) and a second conductive layer (2462), the first conductive layer (2461) comprises a first part of a line of the first electrical connector (212), and the second conductive layer (2462) comprises a second part of the line of the first electrical connector (212).

5. The inertial sensor (20) according to any one of claims 1 to 4, wherein the substrate layer (210) further comprises:
a second electrical connector (213), wherein the second electrical connector (213) is attached to a side that is of the substrate (211) and that is away from the first electrical connector (212); and
a via (214), wherein the via (214) penetrates the substrate (211) and is electrically connected between the first electrical connector (212) and the second electrical connector (213).

6. The inertial sensor (20) according to claim 5, wherein the second electrical connector (213) covers the via (214), and is in a sealed connection to the substrate (211).

7. The inertial sensor (20) according to claim 5 or 6, wherein the first electrical connector (212) covers the via (214), and is in a sealed connection to the substrate (211).

8. The inertial sensor (20) according to any one of claims 5 to 7, wherein the inertial sensor (20) further comprises a chip (21), and the chip (21) is disposed on a side that is of the substrate layer (210) and that is away from the mechanical structure layer (220).

9. The inertial sensor (20) according to any one of claims 1 to 4, wherein the chip (21) is disposed on a side that is of the cover layer (230) and that is away from the mechanical structure layer (220), and the cover layer (230) comprises:
a cover substrate (232), wherein the cover substrate (232) is a conductor, the cover substrate (232) is in a sealed connection to the mechanical structure layer (220), and the cover substrate (232) comprises a first part (2321) and a second part (232a);
an insulation part (234), wherein the insulation part (234) penetrates the cover substrate (232), and the first part (2321) of the cover substrate (232) and the second part (232a) of the cover substrate (232) are located on both sides of the insulation part (234); and
a third electrical connector (233), wherein the third electrical connector (233) is attached to a side that is of the cover substrate (232) and that is close to the chip (21), the third electrical connector (233) is electrically connected to a first part at the mechanical structure layer (220) through the first part (2321) of the cover substrate (232), and the third electrical connector (233) is electrically connected to the internal pin (242) through the second part (232a) of the cover substrate (232) and a second part at the mechanical structure layer (220).

10. The inertial sensor (20) according to claim 9, wherein the first part (2321) of the cover substrate (232) and the mechanical structure layer (220) are connected by a bonding connector (231), the first part (2321) of the cover substrate (232) further comprises an overflow groove (235), and the overflow groove (235) is located between the bonding connector (231) and the insulation part (234).

11. The inertial sensor (20) according to claim 9 or 10, wherein the inertial sensor (20) further comprises the chip (21), and the chip (21) is disposed on the side that is of the cover layer (230) and that is away from the mechanical structure layer (220).

12. The inertial sensor (20) according to any one of claims 1 to 11, wherein resistivity of the substrate (211) is greater than 10⁹ Ωm.

13. The inertial sensor (20) according to any one of claims 1 to 12, wherein a material of the substrate (211) is glass, and a material of the mechanical structure layer (220) is monocrystalline silicon or polycrystalline silicon.

14. An electronic device (100), comprising the inertial sensor (20) according to any one of claims 1 to 13.
